# EUROPEAN PATENT APPLICATION

(11) **EP 1 315 109 A1**
(43) Date of publication of application: **28.05.2003**
(21) Application number: 02025698.8
(22) Date of filing: 20.11.2002
(51) Int. Cl.: G06F 17/60

(54) **System and device for using attribute information**

(30) Priority: 21.11.2001 JP 2001356567; 03.09.2002 JP 2002257531
(71) Applicant: MATSUSHITA ELECTRIC INDUSTRIAL CO., LTD., Kadoma-shi, Osaka 571-8501 (JP)
(72) Inventor: Kageyama, Mitsuhiro, Tokyo 190-0032 (JP); Tsurubayashi, Ken, Tokyo 125-0061 (JP); Nakamura, Yasuhiro, Kanagawa 215-0023 (JP); Uranaka, Sachiko, Tokyo 113-0021 (JP); Okamura, Kazuo, Kanagawa 213-0013 (JP); Morioka, Mikio, Tokyo 144-0046 (JP); Sakata, Tsuyoshi, Kanagawa 241-0816 (JP)
(74) Representative: Grünecker, Kinkeldey, Stockmair & Schwanhäusser Anwaltssozietät

(57) **Abstract**

The attribute information utilization system of the present invention includes a center device and a terminal. The center device includes a communication block and a server that receives user attribute information and supplies services in accordance with the attribute information. The terminal includes a communication block, a personal attribute information generation/management block that generates/manages user attribute information, an external device interface block connected to a portable storage device and used to exchange attribute information with the memory device. The terminal sends attribute information managed by the personal attribute information generation/management block or inputted from the portable storage device to the center device to receive services from a server. The user stores the user attribute information in the portable medium and sends the data from the terminal device to the server so as to receive network services from various terminal devices in accordance with the attribute information.

## Description

### BACKGROUND OF THE INVENTION

### Field of the Invention

The present invention relates to an attribute information utilization system for enabling each terminal device to retain personal information used for electronic commerce (EC) transactions or other various transactions. The present invention also relates to devices included in the system and intended to improve the usability of the system.

### Description of Prior Art

In recent years, along with the rapid progress in the utilization of the Internet and the well-arranged environment of the EC through networks, the EC is now spread widely as one of the ordinary commercial transactions, thereby people have come to use the EC in various fields of purchasing products, tickets, musical contents, etc. In the near future, the use of the EC will be getting more popular, since the Internet will come to be kept connected normally and accessed through various broadband means.

In each of the conventional EC systems, as disclosed in the official gazette of JP-A No.222586/2001, the service provider stores the personal information of each user about, for example, hobbies, tastes, etc. in a hobby/taste data base and each user's purchase history in a purchase history management data base. The data recorded in the purchase history management data base is analyzed to update the contents in the hobby/taste data base. The hobby/taste data base is referred to introduce products to the users so as to guide them to products matching with their hobbies and tastes.

The EC service also includes such additional services as discounting of prices according to the purchase results of users.

In the conventional EC systems, however, service providers collect user information by themselves, so that the information to be collected is naturally limited. For example, it is actually difficult for the service providers to collect the information related to other EC services, products, and contents purchased by respective users. This is why conventionally the service providers have not been capable of expecting highly accurate analysis results from purchase history records of those users.

On the other hand, a user, when accessing an EC service other than usual ones, is regarded as a "new customer" and rejected to accept additional services and obtain guidance about his/her favorite products and contents. This will make the user feel displeased.

### SUMMARY OF THE INVENTION

In order to solve the above conventional problem, the present inventor et al have proposed a method for disclosing user's personal information (attribute information) including the purchase history stored in his/her terminal to the subject server according to a request therefrom when the user accesses an EC service.

According to this method, the disclosing of attribute information makes it possible for the user who accesses EC services can receive services satisfactorily even at shops the user has never visited before while the service provider can collect his/her personal information efficiently.

The present invention intends to further improve the usability of this method (attribute information utilization system).

In the near future, the Internet will be more useful, since it is accessed through various broadband means and kept connected normally to various networks. For example, each user might come to access various EC services from some terminals installed at home, in office, and outside his/her house, for example, from the company so as to obtain products online on various business and hobby utilization purposes.

Under the circumstances, it is an object of the present invention to provide an attribute information utilization system that enables the users to accept network services without using any special terminals, as well as to provide devices to be employed for the system.

In order to achieve the above object, the attribute information utilization system of the present invention is configured by a center device and a plurality of terminal devices . The center device includes a server for receiving attribute information of each user who requests services through a network and supplying the services matching with his/her attribute information and a service attribute information generation/management block for generating attribute information of a service/contents from the user's attribute information so as to provide the user with the services matching with the user's attribute information. The terminal device through which the user requests services includes a personal attribute information generation/management block for generating/managing the user's attribute information and an external device interface connected to a portable storage device and used to send/receive user attribute information to/from external devices so that attribute information generated by the personal attribute information generation/management block or inputted from the portable storage device through the external device interface is sent to the center device through a network.

This configuration makes it possible to enable each user to accept services matching with his/her attribute information through any terminal device connected to a portable storage device in which the user's attribute information is stored.

As described above, the terminal device of the present invention includes a personal attribute information generation/management block for generating/managing the user's attribute information and an external device interface connected to a portable storage and used to send/receive user attribute information to/from external devices. The personal attribute information generation/management block generates/manages profile information and reference information as attribute information. The profile information includes the account, name, address of the user. The preference information includes user's taste information. The profile information and the preference information are corresponded to the user's attribute type information that denotes each of user's utilization purposes. The attribute information generated by the personal attribute information generation/management block or inputted from the portable storage through the external device interface is sent to the center device through a network to enable the user to receive desired services from the center device.

The configuration of the terminal device makes it possible for the user to store his/her attribute information in the portable storage device and send the information to the server from the terminal device as needed, thereby receiving network services from various terminal devices. The user can also receive services matching with his/her utilization purpose when he/she sets his/her attribute information for each of utilization purposes, such as work, hobby, circle activity and sends the information to the server so as to receive a service matching with each of sent utilization purpose.

These and other objects, features, and advantages of the present invention will become more apparent upon a reading of the following detailed descriptions and drawings, in which:

### BRIEF DESCRIPTION OF THE DRAWINGS

Fig.1 is a block diagram of an attribute information utilization system in an embodiment of the present invention;
Fig.2 is a block diagram of a terminal device in the embodiment of the present invention;
Fig.3 is a block diagram of a center device in the embodiment of the present invention;
Fig.4 is a data structure of profile information in the embodiment of the present invention;
Fig.5 is a data structure of preference information in the embodiment of the present invention;
Fig.6 is a configuration required for a pre-processing for generating preference information in the embodiment of the present invention;
Fig.7 is a management table for storing a terminal device - preference relationship in the embodiment of the present invention;
Fig.8 is a flowchart of the first procedure for generating preference information in the embodiment of the present invention;
Fig.9 is a flowchart of the second procedure for generating preference information in the embodiment of the present invention;
Fig.10 is a chart for describing integration/separation of attribute information in the embodiment of the present invention;
Fig.11 is a chart for describing a procedure for moving attribute information in the embodiment of the present invention;
Fig.12 is a chart for describing a procedure for synchronizing a piece of attribute information with another in the embodiment of the present invention;
Fig.13 is a chart for describing a procedure for generating preference information automatically with use of another terminal device in the embodiment of the present invention;
Fig.14 is a chart for describing a procedure for recovering original attribute information in the embodiment of the present invention;
Fig.15 is a chart for describing how to send attribute information from a terminal device to a center device in the embodiment of the present invention;
Fig.16 is a chart for describing how to send attribute information from a portable storage device to the center device in the embodiment of the present invention;
Fig.17 is a chart for describing how to send backup attribute information to the center device in the embodiment of the present invention;
Fig.18 is a chart for describing how to integrate attribute information of one user with those of others in the embodiment of the present invention;
Fig.19 is a detailed block diagram of the center device in the embodiment of the present invention;
Fig.20 is a chart for describing contents attribute information managed by the center device in the embodiment of the present invention; and
Fig.21 is a block diagram of a terminal device that can write attribute information directly in the portable storage device in the embodiment of the present invention.

### DESCRIPTION OF THE PREFERRED EMBODIMENT

Hereunder, the preferred embodiment of the present invention will be described with reference to the accompanying drawings.

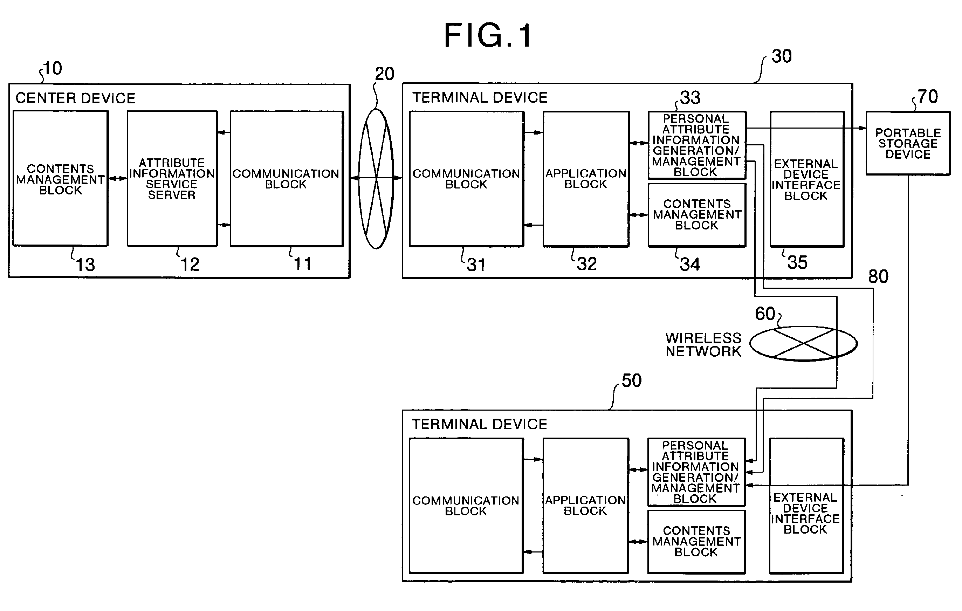

The attribute information utilization system in the embodiment of the present invention is, as shown in Fig.1, configured by a terminal device 30 for storing personal attribute information, a center device 10 for receiving user attribute information from the terminal device 30 through a network 20 and supplying a service according to each received attribute information, and another terminal device 50 for exchanging personal attribute information with the terminal device 30 through a portable storage device 70. The portable storage device 70 may be replaced with a wireless network 60 or wired device 80. In this case, however, it is premised that the portable storage device 70 is used.

The network 20 may be any of telephone networks, CATV networks, the Internet, and broad-band networks.

The portable storage device 70 may be any of IC cards, SD cards (trademark), memory sticks (trademark), compact magnetic disks, portable telephones if it is small in size and can store data.

The wireless network 60 may be any device that uses infrared ray or BlueTooth and the wired device 80 may be a USB or i-link device.

The terminal device 30 enables the user to send his/her personal attribute information to the center device 10 and receive a service according to the personal attribute information. The terminal device 50 enables the user to access the center device 10 and present the personal attribute information received from the terminal device 30 through the wireless network 60, the wired device 80, and the portable storage device 70, thereby enabling the user to receive the service from the center device according to the attribute information.

The terminal device 30 further includes a communication block 31 for communicating through the network 20, an application block 32 for executing such an application program as a browser, a personal attribute information generation/management block 33 for generating/managing personal attribute information, a contents management block 34 for storing/managing contents generated and received from the center device 10, and an interface block 35 for interfacing external devices.

The personal attribute information generation/management block 33 manages personal attribute information generated in itself and received from external devices and outputs the personal attribute information to external devices.

The external device interface block 35, when the portable storage device 70 is an external device, may read/write data from/to the portable storage device 70 in a contact/non-contact manner. The information read from the external device interface block 35 may be sent through an internal bus or wired device that employs wired communication device or a wireless device that employs a non-contact communication/wireless communication device.

The configuration of the terminal device 50 is the same as that of the terminal device 30.

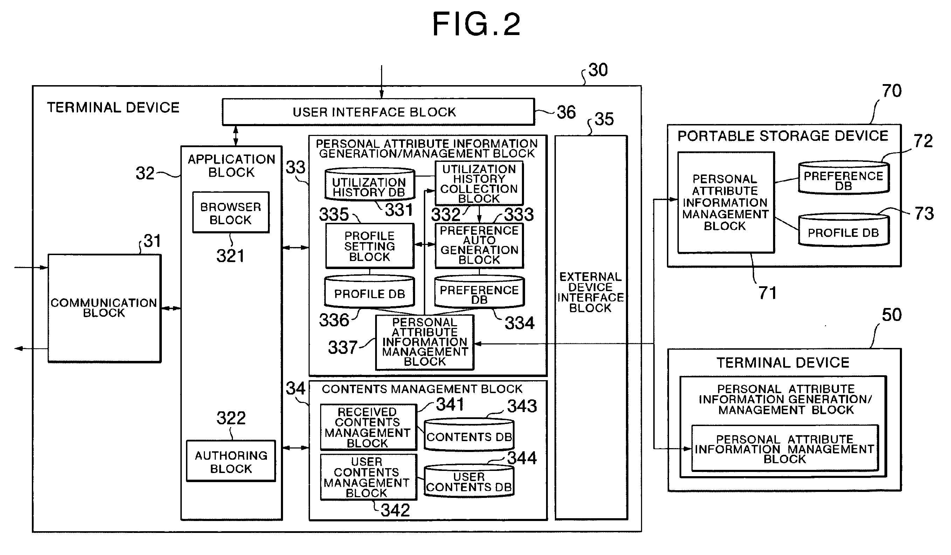

Fig.2 shows a detailed block diagram of the terminal device 30. The application block 32 includes a browser block 321 for reading HTML document received through the Internet to draw the contents described in the document and an authoring block 322 for editing voice data, as well as moving and still picture data to make service contents. The browser block 321 and the authoring block 322 receive user' s instructions through the user interface block 36.

The user's attribute information stored and managed by the personal attribute information generation/management block 33 is divided into profile information and preference information. The profile information identifies each user and the preference information denotes a user' s taste. The profile information includes items of address, name, sex, date of birth information related to the user and the preference information includes items of hobby, taste, favorite category of contents, favorite service provider (frequently accessing EC site, etc.) related to the user.

The personal attribute information generation/management block 33 includes a utilization history DB 331 for storing utilization history information such as broadcast program watching history, home page access history, EC utilization records, mail sending/receiving records, etc., utilization history collection block 332 for collecting utilization history information from the utilization history DB 331, preference auto generation block 333 for analyzing the user' s taste from collected utilization history information to generate preference information, a preference DB 334 for storing generated preference information, a profile setting block 335 for accepting registration of profile information, a profile DB 336 for storing profile information, and a personal attribute information management block 337 for managing attribute information in which profile information and preference information are integrated and outputting the attribute information in response to each request from external.

The contents management block 34 includes a received contents management block 341 for managing contents received from external through the network 20 as received contents, a contents DB 343 for storing received contents, a user contents management block 342 for managing contents generated by the authoring block 322 as user contents, and a user contents DB 344 for storing user contents.

The portable storage device 70 includes a preference DB 72 for storing preference information received from the personal attribute information management block 337 of the terminal device 30 through the external device interface block 35, a profile DB 73 for storing profile information received from the personal attribute information management block 337, and a personal attribute information management block 71 for managing storing/reading information in/from the preference DB 72 and the profile DB 73.

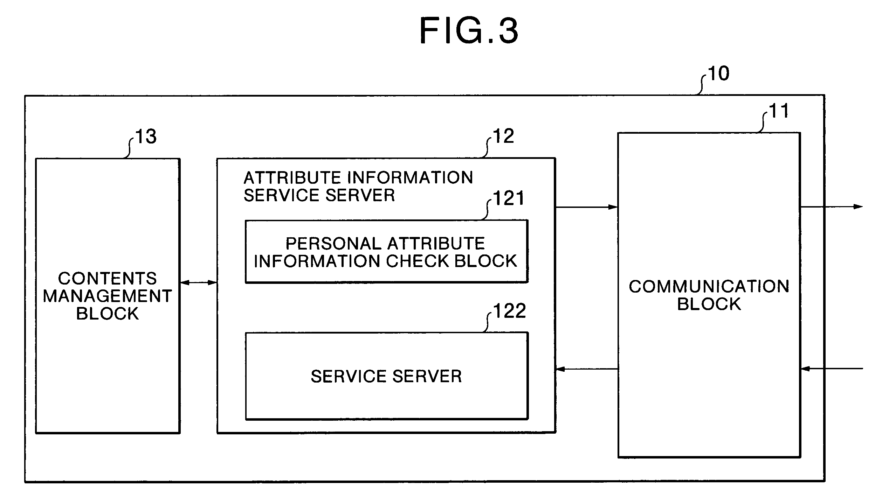

The center device 10 includes a communication block 11 for communicating through the network 20, an attribute information service server 12 for supplying services in accordance with personal attribute information, and a contents management block 13 for storing/managing contents. The attribute information service server 12, as shown in Fig.3, includes a personal attribute information check block 121 for checking the validity of attribute information received from terminal devices and a service server 122 for supplying services. The service server 122 is, for example, an EC server or moving picture stream distribution server for distributing contents managed by the contents management block 13.

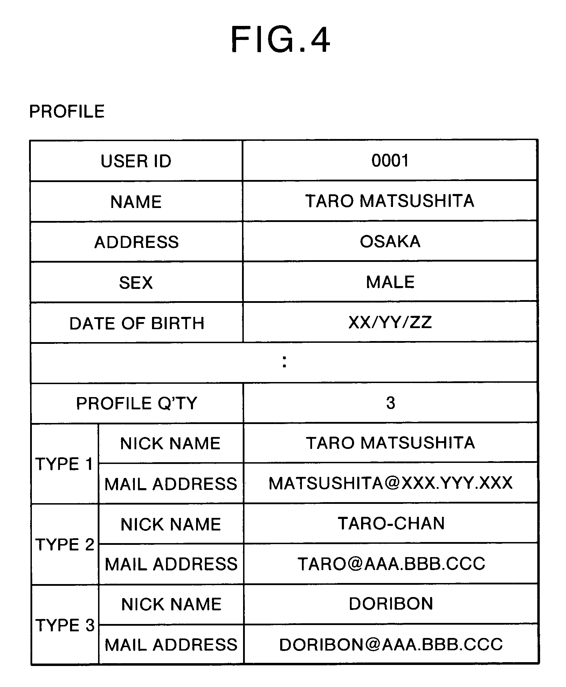

Next, a description will be made for the personal attribute information managed by the. personal attribute information generation/management block 33 of a terminal device. Personal attribute information may be that of each user, divided into those in accordance with such utilization purposes as work, hobby, circle activity, etc. Fig.4 shows an example of profile information set by the profile setting block 335 and managed by the personal attribute information generation/management block 33. This profile information includes fixed values common to each of the user's utilization purpose such as user ID, name, address, sex, date of birth (height, weight, family make-up, credit card number, etc.). Profile information classified by utilization purpose is divided into types 1, 2, and 3 and both nick name and mail address are set for each profile information.

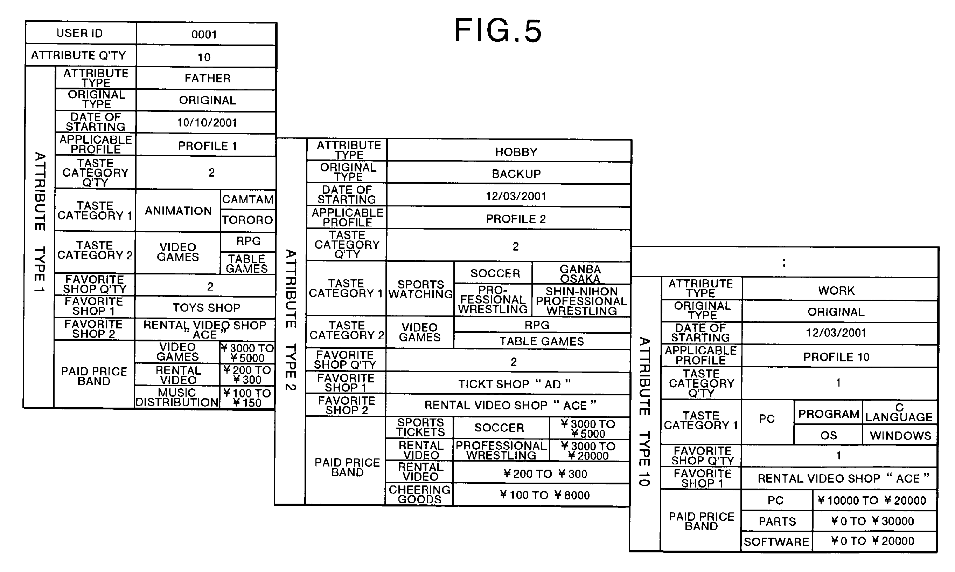

Fig.5 shows an example of preference information generated by the preference auto generation block 333 and managed by the personal attribute information generation/management block 33. In this example, the preference information is divided into "10" (the number of attributes) by utilization purposes. Attribute type 1 is preference information for a role as a father who communicates with his children. Attribute type 2 is preference information for hobbies, ... and attribute type 10 is preference information for work.

The preference information in each type describes data items such as attribute type, starting date, applicable profile, the number of taste categories, contents of each taste category, the number of favorite shops and details of each favorite shop, paid price band, etc. The preference information also includes "original type" for distinguishing between original information and copied backup information.

The personal attribute information generation/management block 33 can move or copy whole or part (in accordance with each utilization purpose) of this attribute information. Attribute information for a utilization purpose is composed of preference information of an attribute type corresponding to a specific utilization purpose and profile information (fixed values + information for each utilization purpose) described in the "usable profile" field of the preference information.

Attribute information moved or copied is passed to the portable storage device 70 or another terminal device through the external device interface block 35. The original type of copied preference information becomes "backup". How preference information is moved will be described later.

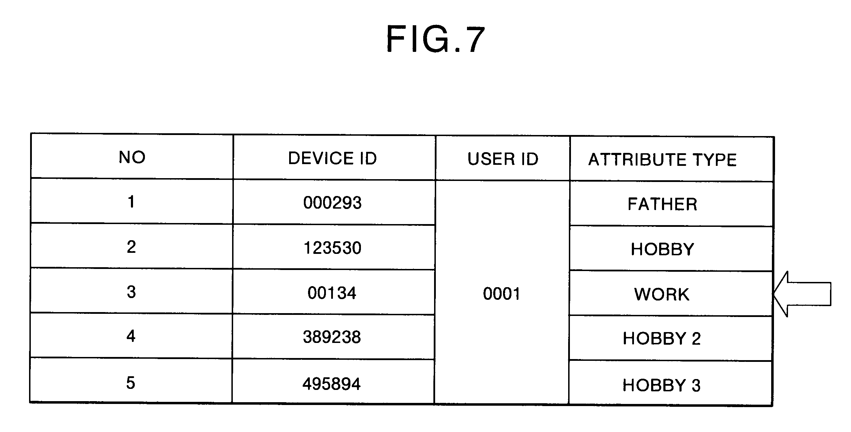

Next, how to generate preference information by utilization purposes will be described. The preference information is generated by the following three methods. In the first method, an attribute type is preset in each of the terminal device and the portable storage device. Fig.7 shows a "terminal device - preference relationship management table" for denoting the relationship between each terminal device and each attribute type. This management table is managed by the personal attribute information management block 337 of the subject terminal device.

The terminal device, when the portable storage device is not connected, collects its utilization history as that of its own attribute type set in the "terminal device - preference relationship management table". When the portable storage device is connected, the terminal device collects the utilization history as that of the attribute type set for the portable storage device in the "terminal device - preference relationship management table".

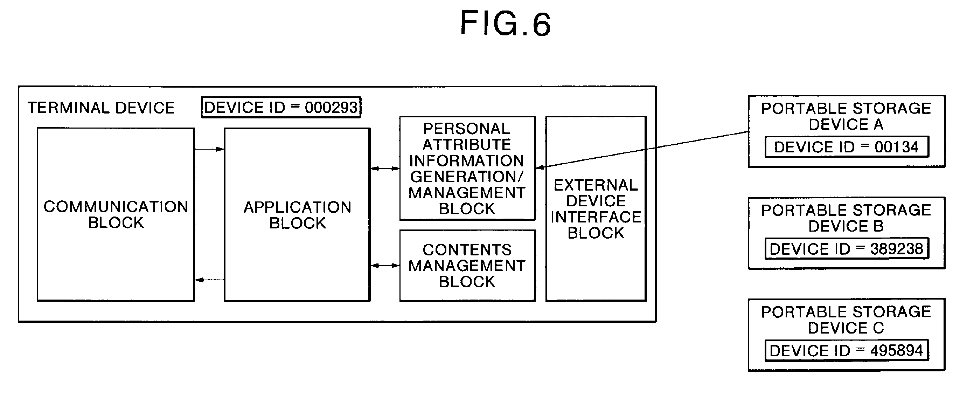

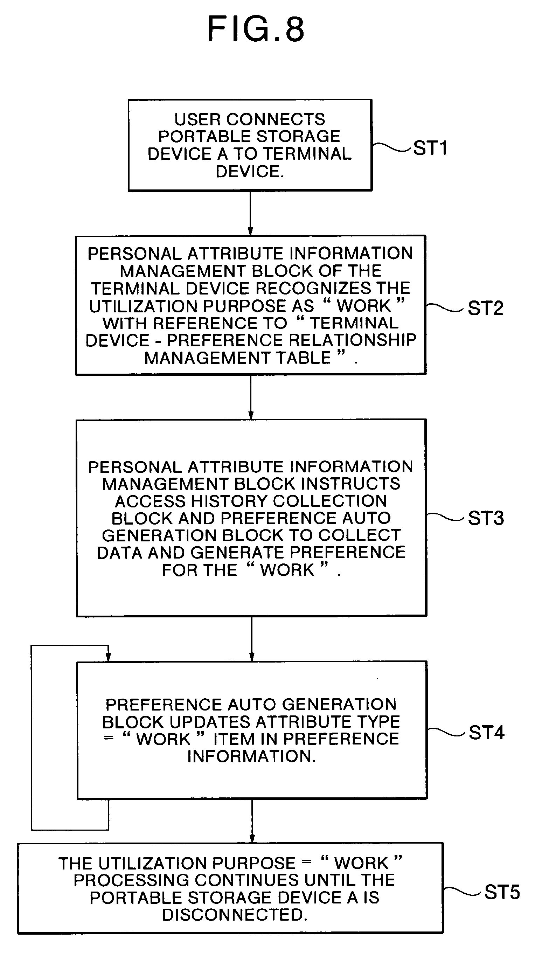

Next, the relationship between terminal devices and attribute types will be described with reference to the flowchart shown in Fig.8 and the chart shown in Fig.6.

Step 1: When the portable storage device A (device ID= 00134) is connected to the terminal device by the user,

Step 2: the personal attribute information management block 337 of the terminal device identifies the utilization purpose as "work" corresponding to the portable storage device A with reference to the "terminal device - preference relationship management table", then

Step 3: instructs the utilization history collection block 332 and the preference auto generation block 333 to collect information according to the utilization purpose "work" and generate the preference information.

Step 4: The preference auto generation block 333 updates the item of attribute type= "work" in the preference information according to the utilization history updated by the user's operation.

Step 5: The preference information is generated according to the utilization purpose = "work" until the portable storage device A is disconnected.

The utilization purpose of the terminal device, when the portable storage device A is disconnected, is changed to "father" with reference to the "terminal device - preference relationship management table".

When a new portable storage device and a new terminal device are to be used, their utilization purposes are preset for the devices and the "terminal device - preference relationship management table" is updated.

In the second method, the user presets an attribute type for each terminal device used by the user and the "terminal device - preference relationship management table" (Fig.7) denoting the relationship among the terminal device, the user ID, and the attribute type is managed by the personal attribute information management block 71 of the portable storage device. This portable storage device manages the preference information of all the attribute types related to one user. The preference DB 72 stores the preference information as shown in Fig.5.

When this portable storage device 70 is connected to the terminal device 30, the personal attribute information management block 337 of the terminal device 30 sends the terminal ID and the user ID to the personal attribute information management block 71 of the portable storage device 70 to request the attribute type. The personal attribute information management block 71 of the portable storage device 70 then refers to the "terminal device - preference relationship management table" to answer the attribute type to the personal attribute information management block 337 of the terminal device 30. When receiving a request from the terminal device 30, the personal attribute information management block 71 sends such preference information as a taste category in the attribute information to the terminal device 30.

Receiving the preference information, the personal attribute information management block 337 of the terminal device 30 generates the preference information of the attribute type with use of the procedures in and after step 3 in the flowchart shown in Fig.8.

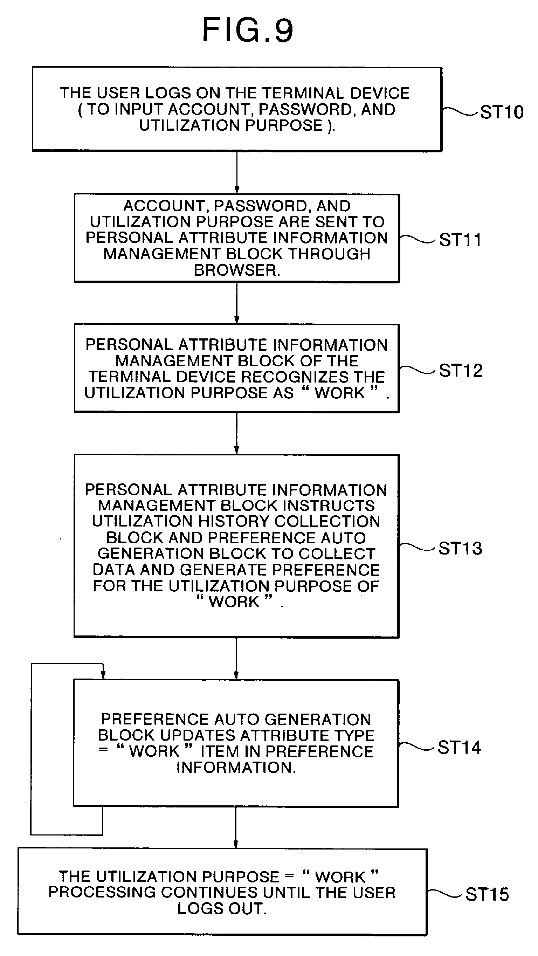

In the third method, the user, when using the terminal device, inputs the utilization purpose. Fig.9 shows a procedure of the user for inputting the utilization purpose together with his/her user account and password at the log-on time.

Step 10: The user, when logging on the terminal device, inputs a utilization purpose (ex., "work") together with his/her account and password.

Step 11: The user account, the password, and the utilization purpose inputted by the user are sent to the personal attribute information management block 337 through the user interface block 36 and the browser block 321.

Step 12: The personal attribute information management block 337 recognizes the utilization purpose as "work", then

Step 13: instructs the utilization history collection block 332 and the preference auto generation block 333 to collect information and generate the preference information matching with the utilization purpose "work".

Step 14: The preference auto generation block 333 updates the attribute type= "work" in the preference information with reference to the utilization history updated by the user's operation.

Step 15: The preference information generation continues in accordance with the utilization purpose = "work" until the user logs out.

The user may register such a utilization purpose any time the user uses an application program, not at the log-on time.

When one user is allowed to have a plurality of accounts, each corresponding to a utilization purpose, the utilization purpose can be identified just at an account input.

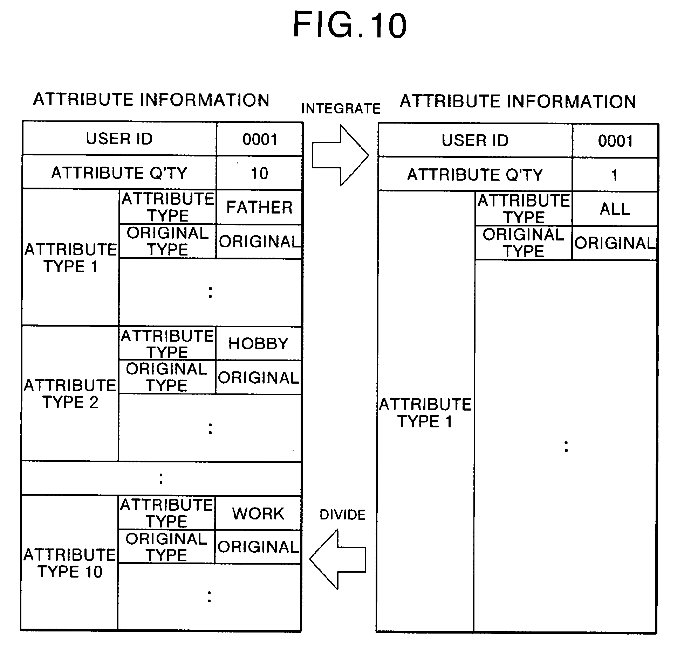

The personal attribute information management block 337, as shown in Fig.10, can integrate/divide the attribute information of a user composed of a plurality of pieces of attribute information according to the instruction from the user. In this case, integration of a plurality of pieces of attribute information into one is performed automatically. Division of one attribute type information into a plurality of pieces of attribute information is performed by an operation of the user.

The personal attribute information generation/management block 337 can add a copy of another user's attribute information to the plural pieces of attribute information to be integrated when it integrates the attribute information of a user composed of a plurality of pieces of attribute type information.

Data can also be divided automatically into categories such as sports watching, movie watching, etc. The user may set an "attribute type" to each of those divided categories.

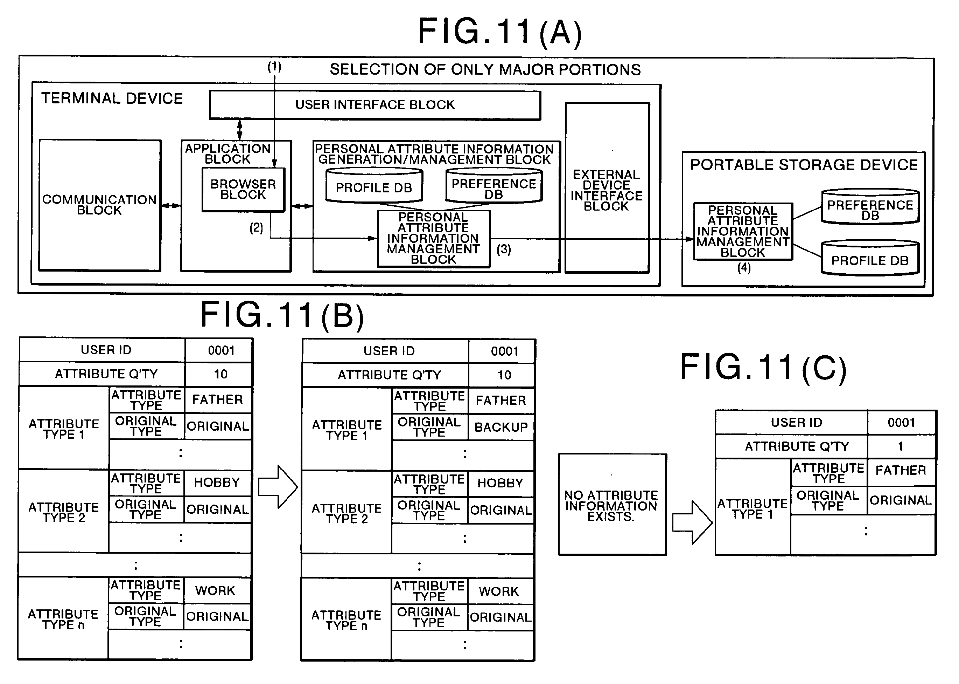

Fig.11 shows a processing for moving attribute information from a terminal device to its portable storage device connected to the terminal device.

As shown in Fig.11(a), when the user instructs the terminal device to move the attribute information corresponding to a specific utilization purpose to the portable storage device on the browser screen (step 1), a request for moving the attribute information of the requested attribute type 1 is issued to the personal attribute information management block from the browser block (step 2). The personal attribute information management block copies the attribute information of the specified type 1 so as to be used for backup and the copied one to the portable storage device and retains the original therein. As shown in Fig.11(b), the original type included in the preference information of the copied attribute information is updated to "backup" (step 3). The personal attribute information management block of the portable storage device stores the profile information of the attribute information obtained from the terminal device in the profile DB and the preference information in the preference DB so as to manage it as the original attribute information as shown in Fig.11 (c) (step 4).

When the portable storage device is connected to the terminal device, the steps (1) and (2) are skipped and the personal attribute information management block can move the attribute information to the portable storage device on its determination any time the preference auto generation block generates preference information.

The user can also suppress backup of the attribute information at his/her terminal device.

Attribute information, when it is left as backup one in a terminal device, can be moved and copied as backup one.

While a description has been made for a procedure for moving only part of attribute information of a specific utilization purpose, the procedure can also be used for moving whole of the attribute information.

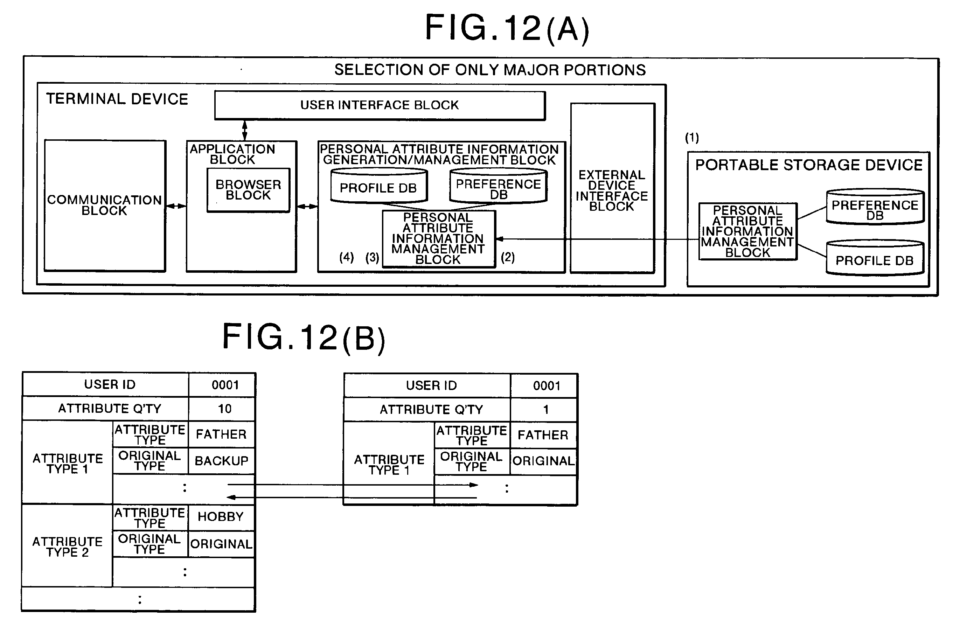

Fig.12 shows processings for synchronizing one attribute information with another when a difference occurs between the attribute information of a user managed by a portable storage device and the attribute information of the same user managed by a terminal device. Such a difference between two pieces of attribute information occurs, for example, when the preference information stored in the preference DB of a portable storage device is updated with use of the portable storage device connected to another terminal device. At this time, it is premised that the portable storage device includes attribute information moved by the procedure shown in Fig.11. By connecting the portable storage device to the source terminal device, the attribute information stored in the portable storage device can be synchronized with the backup one stored in the source terminal device.

At this time, if the portable storage device is connected to the terminal device (step 1), the personal attribute information management block identifies the portable storage device (step 2) and checks the attribute information in the portable storage device(step 3), thereby both pieces of information are synchronized with each other (step 4).

The synchronization processing comes to copy original information when only the original information is updated. If both pieces of original and backup attribute information are updated, the updating is done only for the difference as shown in Fig.12(b) by updating the added, deleted, and updated portions in both pieces of information.

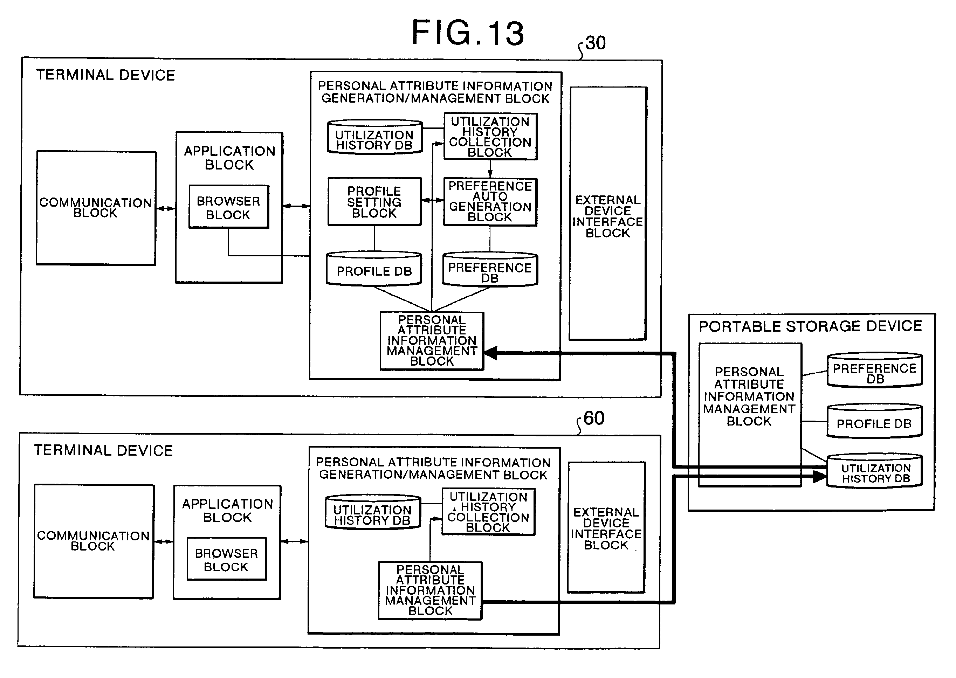

As shown in Fig.13, when there is a terminal device 60 provided with a function for collecting utilization history information, but not provided with any function for generating preference information automatically, a portable storage device is connected to this terminal device 60 so that the utilization history data of the device 60 is recorded in the portable storage device, thereby this portable storage device can be connected to the terminal device 30 provided with an preference auto generation block. As a result, the utilization history data is passed to the terminal device 30 and the preference information generated by the generation block is stored in the preference DB of the portable storage device. Consequently, this system is enabled to use a lower price terminal devices not provided with the preference auto generation block.

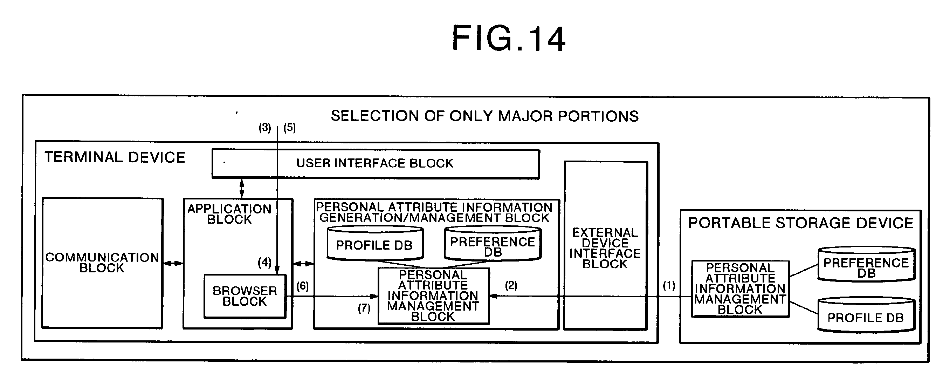

When a portable storage device that retains original attribute information goes down and the original attribute information is lost, a recovery portable storage device prepared by the device maker is indispensable. Otherwise, the original information cannot be restored from the backup one. Fig.14 shows how to restore the original information from the backup one with use of such a recovery portable storage device.

At first, the backup portable storage device is connected to the terminal device that retains backup attribute information (step 1). The personal attribute information management block of the terminal device then recognizes this backup portable storage device (step 2). When the user inputs a backup request related to the attribute information (step 3), the browser displays the preference information on the screen (step 4) . The user is then requested to select the preference information to be restored (step 5). The browser sends a backup request related to the selected preference information to the personal attribute information management block (step 6). The personal attribute information management block updates the original type of the specified preference information to "original" (step 7).

As described above, the backup portable storage device owned only by the device maker and service providers is indispensable to restore the original information from the backup one. It is thus prevented that the user comes to have a plurality of pieces of original data.

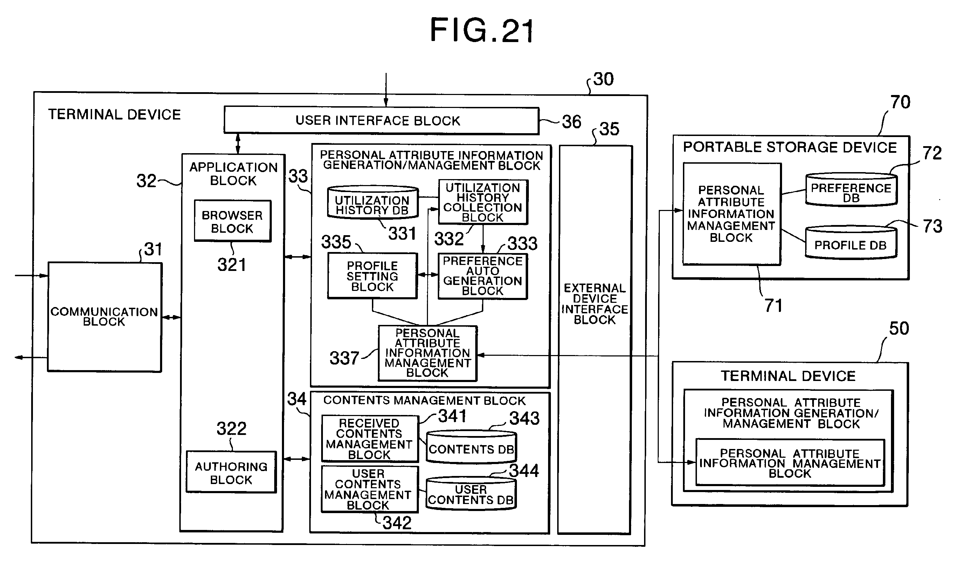

While a description has been done for a case in which the attribute information generated by the personal attribute information generation/management block 33 of a terminal device is stored in a portable storage device by "moving" or "copying" the attribute information, it is also possible to directly write the attribute information in the portable storage device connected to the terminal device. Fig.21 shows a functional block diagram of the terminal device 30 in such a case. The preference information generated by the preference auto generation block 333 and the profile information set by the profile setting block 335 are passed directly to the portable storage device 70 through the external device interface block 35 and stored in both of the profile DB 72 and the profile DB 73 of the portable storage device 70. At this time, the original type of the attribute information written in the portable storage device 70 is updated to "original".

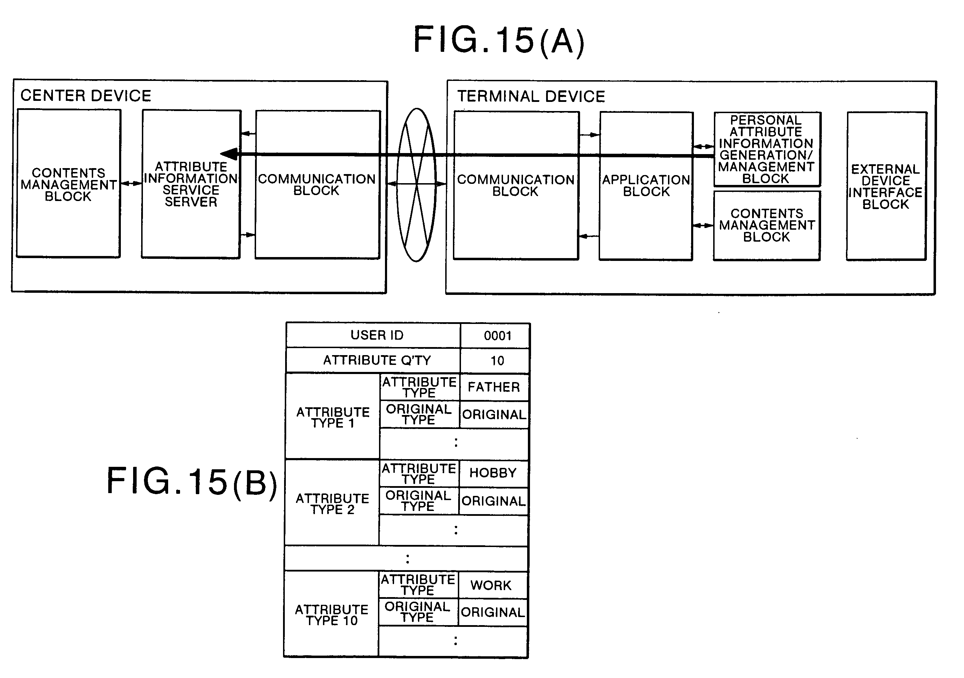

Next, a description will be made for a procedure for sending attribute information to the center device to receive a service. Fig.15(a) shows a case in which attribute information managed by a personal attribute information management block of a terminal device is sent to the center device. At this time, it is possible to send only the attribute information of a utilization purpose corresponding to the processing by the preference auto generation block of the terminal device as attribute information. For example, when a terminal device is used in accordance with the "utilization purpose = father", it is possible to hide the information of all the types except for the attribute type 1 in the attribute information shown in Fig.15(b) before it is sent to the destination.

As described above, the service provider can supply services in accordance with not only tastes, but also with utilization purposes by identifying each attribute type of attribute information to be sent to the attribute information service server of the center device 10. In other words, the service provider can supply proper services, since each service request can be distinguished among utilization purposes such as hobby and work of the user himself/herself, anything for children, etc.

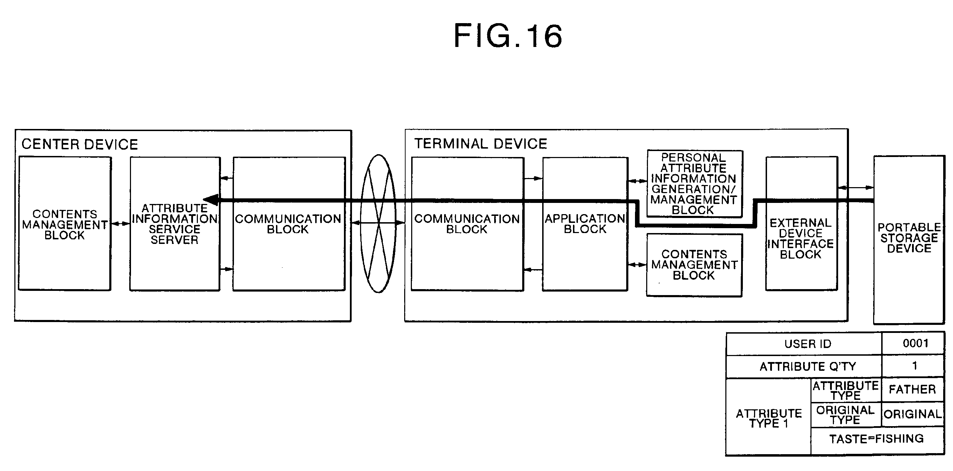

Fig. 16 shows a case in which attribute information stored in a portable storage device is sent to the center device 10 to request a service. In this connection, the attribute information service server of the center device 10 checks only the validity of the attribute information through the personal attribute information check block; it does not check whether or not the attribute information has been stored in a portable storage device. This is why the user can receive services from the center device 10 from any of his/her terminal devices while he/she brings the portable storage device with him/her.

The attribute information service server of the center device 10 checks whether or not the user ID matches between the profile information and the preference information in each user attribute information and whether the attribute information is original or backup one to check the validity of the attribute information. When the user ID does not match between both information items, the server rejects proving of the requested service.

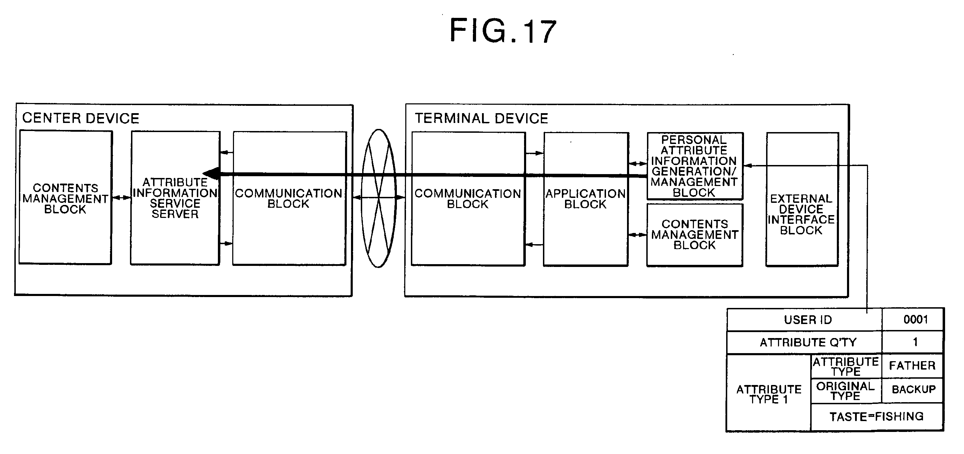

As shown in Fig.17, while the terminal device can send backup attribute information managed by the personal attribute information generation/management block to the target server, the server can identify the attribute information as backup one according to the description of the original type in the preference information.

If any attribute information is identified as backup one such way, the server can limit or reject services to be provided according to the attribute information. This can prevent copied data from being spread widely.

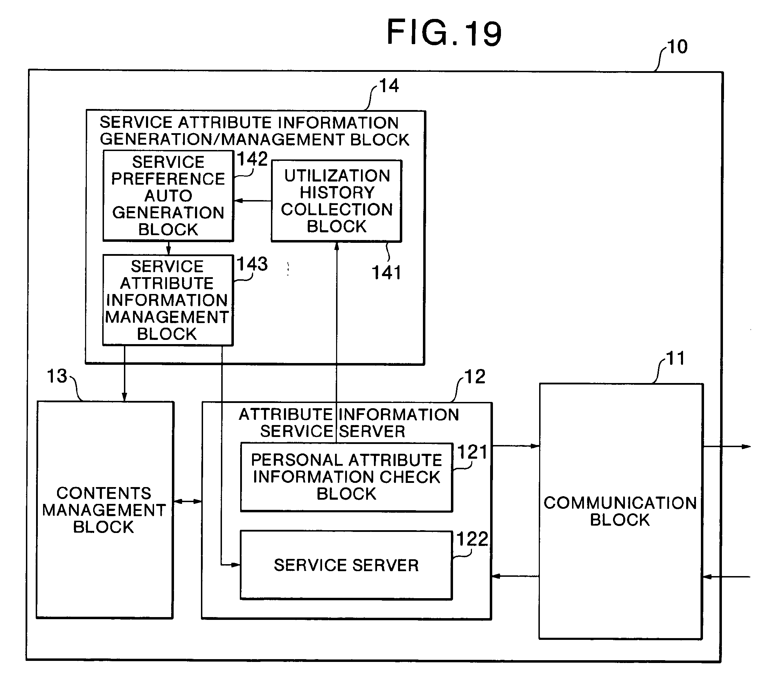

The center device, as shown in Fig.19, is provided with a service attribute information generation/management block 14 together with a communication block 11, an attribute information service server 12, and a contents management block 13 . However, the service attribute information generation/management block 14 can also assign attribute information to any services/contents with use of the attribute information of each user who uses those services and contents as one of the methods for assigning attribute information to services/contents.

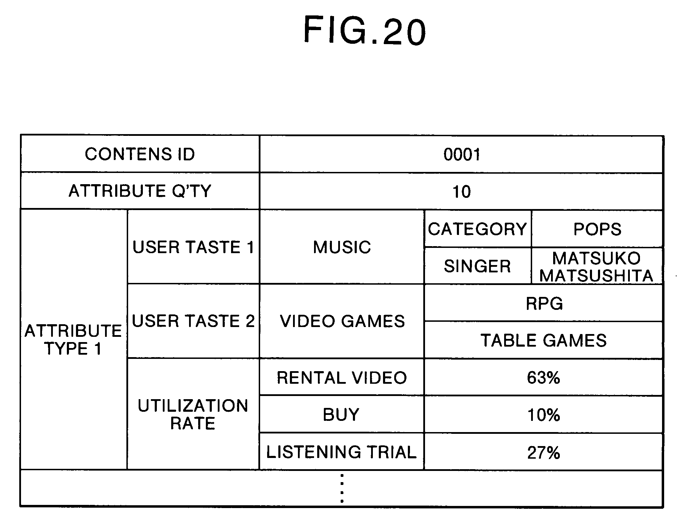

In this case, the service attribute information generation/management block 14 is provided with a utilization history collection block 141 for collecting attribute information of each user who uses services and contents, a reference auto generation block 142 for automatically generating preference information that denotes what services and contents are used by each user from the utilization history information collected by the utilization history collection block 141, and a service attribute information management 143 for managing the preference information generated by the reference auto generation block 142 as attribute information of services and contents. Fig.20 shows an example of the attribute information of contents managed by the service attribute information management 143. It is found from the preference information set in the attribute information that the contents (ID=0001) attract users who are fans of a pop singer Matsuko Matsushita and fond of video games. The preference information also denotes that the users like renting more than purchasing.

The attribute information service server 12, when receiving a service/contents request together with the user attribute information, checks the user's attribute information through the personal attribute information check block 121, then sends the attribute information to the service attribute information generation/management block 14. The service attribute information management 143 of the service attribute information generation/management block 14 then compares the user's attribute information with the service/contents preference information to notify the attribute information service server 12 of the proper service/contents for the user. The service server 122 of the attribute information service server 12 guides the user to the service/contents notified by the service attribute information management block 143. When the service/content to be supplied to the user is determined, the service server 122 supplies the service/content to the user and sends the information to the service attribute information generation/management block 14. The utilization history collection block 141 of the service attribute information generation/management block 14 stores supplied service/contents as utilization history information. Both pieces of information are corresponded to each other. The reference auto generation block 142 adds the stored utilization history information to the new one to generate the preference information of the supplied service/content.

The center device 10 can use such user's attribute information effectively as described above to provide users with proper and useful services.

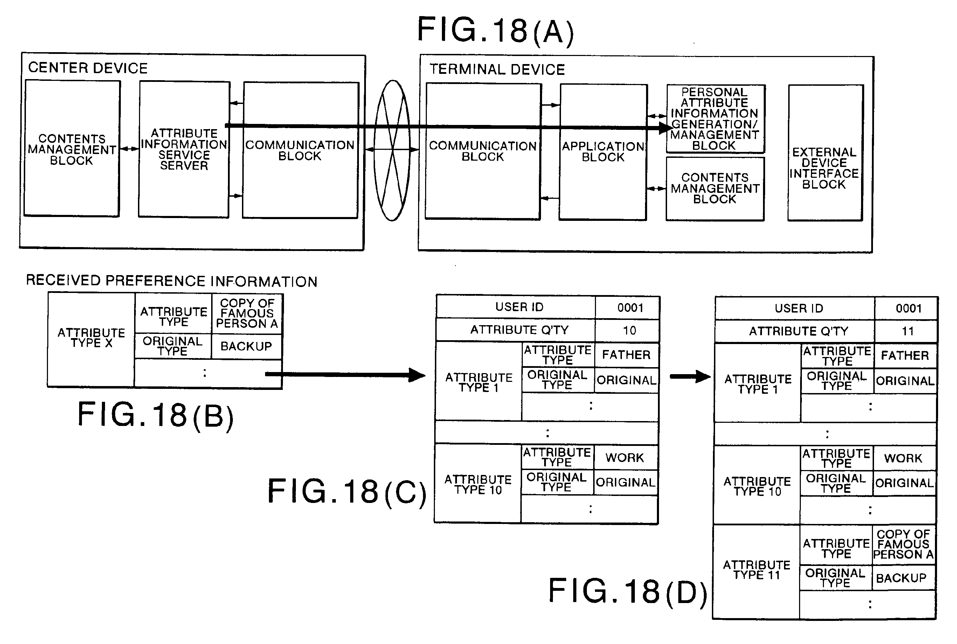

Fig.18 shows a new form of providing services with use of the profile information.

As shown in Fig.18 (a), in this service form, the attribute information service server 12 of the center device 10 sells the preference information of famous people. At this time, the attribute information service server 12 adds such information as "a copy of a famous person A" to the preference information so as to denote that the preference information is not generated by itself, thereby the preference information can be prevented from being used on evil utilization purposes.

The user who has purchased this preference information merges the information with his/her own attribute information (Fig.18(c)) as shown in (Fig.18(d)). By such an operation, a copy of another user's (or other person's) attribute information is added to the plural pieces of attribute information to be integrated. The user can thus identify himself/herself as the famous person and come to receive services from the server with use of the attribute information and enjoy the feeling of the big-name personage.

The present invention also enables the following forms of services to be taken.

The user of a terminal device sets a utilization purpose through the operation panel of the terminal and the personal attribute information generation/management block, receiving the notice of this utilization purpose, determines the utilization purpose of the attribute information to be generated.

When both pieces of attribute information managed by the personal attribute information generation/management block and that managed by the portable storage device are of the same user, the personal attribute information generation/management block synchronizes both pieces of the attribute information.

The terminal device includes a communication block that can communicate with an external transmission path and this communication block enables the personal attribute information generation/management block to communicate with the transmission path.

The personal attribute information generation/management block sends whole or part of the attribute information of each user managed by itself to the center device through the communication block.

The personal attribute information generation/management block sends whole or part of the attribute information managed by a portable storage device connected to the external device interface block to the center device through the communication block.

Each attribute information includes an attribute type that denotes that the attribute information is generated by another user.

The service personal attribute information generation/management block of the center device includes a utilization history collection block for collecting attribute information of users who have used services/contents, a service preference information auto generation block for generating preference information from the information collected by the utilization history collection block, the preference information being composed of the attribute information of each user who uses the services/contents, and a service attribute management block for managing the preference information as service/content attribute information.

This preference information includes taste information of the user who uses services/contents.

While the preferred form of the present invention has been described, it is to be understood that modifications will be apparent to those skilled in the art without departing from the spirit of the invention.

The scope of the invention, therefore, is to be determined solely by the following claims.

## Claims

1. An attribute information utilization system, comprising:
a center device provided with a server for receiving attribute information from a user who requests a service through a network, a service attribute information generation/management block for generating attribute information of said service or service contents from attribute information of said user who receives said service, thereby providing said user with said service having the attribute information of said service or service contents, which matches with the attribute information of said user; and
a terminal device provided with a personal attribute information generation/management block for generating/managing attribute information of said user and an external device interface block connected to a portable storage device and used to send/receive user attribute information to/from said portable storage device, so that attribute information generated by said personal attribute information generation/management block or inputted from said portable storage device through said external device interface block is sent to said center device through said network to request supply of said service.

2. The attribute information utilization system according to claim 1,
wherein attribute information sent from said terminal device to said center device includes original type information that denotes whether said attribute information is original or copied one; and
wherein a server of said center device changes service contents to be provided in accordance with said received original type information.

3. The attribute information utilization system according to claim 1,
wherein attribute information sent from said terminal device to said center device includes attribute type information that denotes a user's utilization purpose for said attribute information; and
wherein said server of said center device changes service contents to be provided according to said received attribute type information.

4. A terminal device, comprising:
a personal attribute information generation/management block for generating/managing user attribute information and an external device interface block connected to a portable storage device and used to send/receive said attribute information to/from said portable storage device;
wherein said personal attribute information generation/management block generates/manages profile information that includes items of account, name, and address information of said user and a preference information that includes user' s taste information as said attribute information, which are corresponded to said attribute type information in said management; and
wherein said terminal device sends attribute information generated by said personal attribute information generation/management block or inputted through said external device interface block from said portable storage device through a network, thereby receiving said service from said center device.

5. The terminal device according to claim 4,
wherein a plurality of pieces of said attribute type information are provided so as to meet to said various user utilization purposes; and
wherein said personal attribute information generation/management block generates/manages said attribute information corresponding to each attribute type information of said user and includes said attribute type information in said attribute information.

6. The terminal device according to claim 5,
wherein said personal attribute information generation/management block holds a table describing a relationship between said device and said attribute type information; and
wherein said personal attribute information generation/management block, when said external device interface block is connected to said portable storage device, refers to said table to obtain attribute type information corresponding to said portable storage device to generate/manage attribute information to be corresponded to said attribute type information.

7. The terminal device according to claim 6,
wherein said personal attribute information generation/management block, when said external device interface block is not connected to said portable storage device, refers to said table to obtain attribute information corresponding to said terminal device itself and generates/manages attribute information to be corresponded to said attribute type information.

8. The terminal according to claim 5,
wherein said personal attribute information generation/management block obtains attribute type information corresponding to said terminal device itself from said portable storage device that holds a table describing a relationship between said terminal device and said attribute type information to generate/manage attribute information corresponding to said attribute type information.

9. The terminal device according to claim 5,
wherein said personal attribute information generation/management block integrates a plurality of pieces of attribute information corresponding to a plurality of pieces of attribute type information of a user into one or divides a piece of attribute information into a plurality of pieces.

10. The terminal according to claim 5,
wherein said personal attribute information generation/management block moves or copies said generated attribute information to/from said portable storage device through said external device interface block.

11. The terminal according to claim 5,
wherein said personal attribute information generation/management block writes said generated attribute information directly in said portable storage device through said external device interface block.

12. The terminal device according to claim 10,
wherein said personal attribute information generation/management block includes original type information for denoting whether said attribute information is original or copy in said attribute information.

13. The terminal device according to claim 12,
wherein said personal attribute information generation/management block, when said attribute information is copied between a terminal device and said portable storage device, enables attribute information other than said original type information to be copied as is; and
wherein, when said original type information of the copy source denotes "original", said attribute information is copied so that the original type information of either the copy source or the copy destination becomes "original" and when said original type information of said copy source denotes "copy", said attribute information is copied so that the original type information of both copy source and copy destination becomes "copy", thereby it is prevented that a plurality of pieces of attribute information in which said original type information is set as "original" are generated.

14. The terminal device according to claim 13,
wherein said personal attribute information generation/management block, only when said backup portable storage device is connected to said external device interface and it holds attribute information in which said original type information is set as "copy", changes said original type information of said attribute information copied from said backup portable storage device to "original".

15. The terminal device according to claim 9,
wherein said personal attribute information generation/management block adds a copy of another user's attribute information to the plural pieces of attribute information to be integrated.
